# EUROPEAN PATENT SPECIFICATION

(11) **EP 0 666 109 B1**
(45) Date of publication and mention of the grant of the patent: **17.05.2000**
(21) Application number: 95300379.5
(22) Date of filing: 20.01.1995
(51) Int. Cl.: B01J 27/053

(54) **Solid superacid catalysts comprising platinum metal and hydrocarbon conversion processes using same**
Feste supersaure Katalysatoren die ein Platinum Metall enthalten und Verfahren zur Umwandlung von Kohlenwasserstoffen unter Verwendung derselben
Catalyseurs solides superacides contenant un métal tel que le platine procédé de conversion des hydrocarbures les utilisant

(30) Priority: 21.01.1994 US 184425; 21.01.1994 US 184154; 21.01.1994 US 184426; 21.01.1994 US 184159
(43) Date of publication of application: 09.08.1995
(73) Proprietor: SUN COMPANY, INC. (R&M), Philadelphia, PA 19103-1699 (US)
(72) Inventor: Umansky, Benjamin S., Wilmington, DE 19810 (US); Bhinde, Manoj V., Boothwyn, PA 19061 (US); Hsu, Chao-Yang, Media, PA 19063 (US); Huang, Chen-Shi, Claymont, DE 19703 (US); Mitchell, Richard E., Glen Mills, PA 19342 (US); Lin, Chiu-Hsun, Yorktown No. 12, Media, PA 19063 (US)
(74) Representative: Lewin, John Harvey

(56) References cited:
- EP-A- 0 174 836
- EP-A- 0 325 811
- EP-A- 0 365 147
- EP-A- 0 520 543

## Description

### Background of the Invention

This invention relates to novel catalysts, methods of preparing the catalysts and a wide variety of catalytic processes employing the catalysts which are performed on hydrocarbons in the presence of hydrogen, including isomerization of hydrocarbons, particularly those with 4 to 10 carbon atoms per molecule and C₂₀-C₄₀ waxy compounds. This invention also relates to novel catalytic hydrocracking and naphtha upgrading processes employing the catalysts of the invention.

### Background of the Art

Current commercial operations for n-butane isomerization include aluminum chloride and noble metal catalyzed processes. The aluminum chloride process, operated at relatively low temperature, is subject to corrosion and spent catalyst disposal problems. In addition, aluminum chloride processes require chloride injections to maintain acidity compensating for chloride lost to the environment. Furthermore, thermodynamic equilibrium limits the yield of isobutane. The process of the present invention causes less corrosion and has lesser environmental implications.

To obtain higher yields of isobutane, other isomerization processes have been developed. Liquid superacids containing a strong protic acid and a strong Lewis acid have been disclosed. See, U.S. Patent Nos. 3,708,553; 3,766,286; 3,839,489; and 3,855,346.

Solid, very strongly acidic materials suitable for catalyzing hydrocarbon reactions have been prepared by others. For example, (1) Hino et al. disclose a butane isomerization catalyst prepared by treatment of zirconium oxides with sulfate ion, for example 1N sulfuric acid, and calcination of the product at 500°C for three hours. Hino et al., "Reactions of Butane and Isobutane Catalyzed by Zirconium Oxide Treated With Sulfate Ion", J. Amer. Chem. Soc. (1979), 6439-41. Solid superacids suitable for catalyzing skeletal isomerizations of butane and isobutane have been prepared by exposing H₄TiO₄, to 1N sulfuric acid and calcining in air at 500°C, as disclosed in (2) Hino et al., "Reactions of Butane and Isobutane Catalyzed by Titanium Oxide Treated With Sulphate Ion", J.S.C. Chem. Comm. (1979), 1148-9. (3) Hino et al., "Synthesis of Solid Superacid Catalyst with Acid Strength of Hₒ < -16.04", J.S.C. Chem. Comm. (1980), 851-2, disclose a preparation similar to that in reference (1) above, wherein Zr(OH)₄ obtained from different sources was calcined at temperatures up to 650°C and found suitable for reactions of butane in a recirculation reactor at 25°C.

In (4) Japanese patent publication 87-344276/49, a solid superacid catalyst was prepared by impregnating a carrier comprising the hydroxide or oxide or a Group III or IV metal with a Group VIII metal¹ for use in producing lower paraffin hydrocarbons from shale oil.
¹ While the abstract refers to Group VII, the examples given are only of Group VIII metals.

In (5) Hosoi et al., Amer. Chem. Soc. Los Angeles Meeting, Sept. 1988, Div. Petr. Chem. Pre. Print, 561-567, C₅ and C₆ hydrocarbons are isomerized at reaction temperatures of 140° to 200°C using sulfated zirconia superacid catalyst with and without the addition of platinum, palladium, rhodium, nickel, ruthenium, iron, tungsten or molybdenum. Isomerization activity was found to be enhanced by addition of platinum.

In (6) Baba et al., Japanese Patent No. 61-2633932, Nov. 21, 1986, filed May 17, 1985, and (7) Baba et al., U.S. Patent No. 5,036,035, hydrocarbons are isomerized at reaction temperatures below 400°C using a catalyst obtained by impregnating Group VIII metals, e.g. nickel, platinum, ruthenium, rhodium, palladium, osmium or iridium, and sulfate ion or precursor thereof in a carrier made of Group IV metals, e.g. titanium, zirconium, hafnium, silicon, germanium or tin, and/or hydroxide or oxide of Group III metals, e.g. aluminum, gallium, indium and thallium, and stabilizing by roasting at 450-800°C for 5 to 16 hours. The catalysts disclosed maintained their activity over a period of 16 hours.

In (8) Ueda et al., Japanese Patent No. 62-246993, filed Apr. 2, 1986, paraffin hydrocarbons are thermally cracked at 150-350°C and over 5066 kPa (50 atmospheres) hydrogen pressure in the presence of a solid, highly acidic catalyst made by impregnating a Group VIII metal, e.g. nickel, platinum, ruthenium, rhodium, palladium, osmium or iridium, on a supporting body of a hydroxide or oxide of Group III or Group IV metals, e.g. titanium, zirconium, silicon, germanium, gallium or indium, followed by treating with sulfuric acid and roasting to stabilize the catalyst.

References (6), (7) and (8) indicate that addition of certain Group VIII metals improves the catalytic activities of the solid superacids and that these solid superacids are suitable for isomerization of alkanes and xylenes, and cracking of shale oil to light paraffins.

In (9) Hollstein et al., U.S. Patent No. 4,918,041, disclose a sulfated, very strongly acidic catalyst which contains, in addition to oxide or hydroxide of Group III or Group IV element and Group VIII metal, as in references (6), (7) and (8) above, oxide or hydroxide of a Group V or Group VI or Group VII metal. This catalyst is, for example, useful in the isomerization of paraffin hydrocarbons.

In reference (9), as well as (10) Hollstein et al., U.S Patent No. 4,956,519, and (11) Hsu et al., U.S. Patent 5,019,671, it was also shown that sulfated metal oxide catalysts are active in isomerization reactions at low temperatures without the addition of chloride compounds which create corrosion problems and environmental problems.

EP-A-0 174 836 describes sulfation of an oxide support, particularly aluminium oxide. Followed by calcination after which at least one group VIII metal is introduced followed by a further calcination.

Low temperature isomerization processes thermodynamically favor the creation of branched paraffins. This advantage of low temperature isomerization catalysts can be diminished or lost through increased deactivation of the catalyst, even at mild reaction conditions. Under such conditions, the solid superacid catalyst can be deactivated by trace amounts of impurities in the feed or by coke precursors formed in the reaction process thereby shortening the life of the catalyst. An advantage of the catalysts of the present invention, believed to result from use of two calcination steps, is that they have extremely long life.

Two possible approaches to minimize the deactivation of the catalyst include: (1) Operating the reaction under supercritical conditions (without hydrogen and hydrogenation-type metals) so that coke precursors are dissolved in the supercritical paraffin fluids; and (2) Using hydrogenation-type metals and hydrogen that can hydrogenate coke precursors and reduce the rate of deactivation. The present invention relates to the latter approach.

### Summary of the Invention

A catalyst composition comprising a mixture of:
(a) a sulfated support comprising oxide or hydroxide of Group III or Group IV elements; and
(b) a first metal comprising a metal or mixture of metals selected from the group consisting of platinum, palladium, nickel, platinum and rhenium, and platinum and tin and combinations thereof;
wherein said catalyst is obtainable by the steps comprising:
(1) calcining said sulfated support in a first calcination step at a temperature in the range of from 550 to 750°C;
(2) introducing said first metal into said sulfated support; and
(3) calcining said sulfated support and said first metal in a second calcination step at a temperature in the range of from 450 to 550°C,
wherein said second calcination step is carried out at a lower temperature than said first calcination step.

The catalyst may further comprise Group VIII metals and/or Group V, VI or VII metals, or combinations thereof, incorporated on the support before the first calcination step. The use of at least two separate calcination steps has been found to produce superior catalysts for use in the processes of the present invention. In the presence of hydrogen, this catalyst is characterized by having high isomerization activity, naphtha upgrading activity, hydrocracking activity and extremely long catalyst life.

### Detailed Description of the Invention

The catalysts according to the present invention comprise a sulfated solid mixture of oxide or hydroxide of Group III or IV element and a first metal comprising a metal or mixture of metals selected from the group consisting of platinum; palladium; nickel; platinum and rhenium; and platinum and tin, and combinations thereof. The composition is calcined at least once prior to introduction of said first metal and again subsequent to said introduction. The use of separate calcination steps before and after incorporation of the first metal has been found to produce unexpectedly superior catalysts with regard to both extended catalyst life and conversion activity.

The catalyst may further comprise a second metal selected from the Group VIII metals and/or a third metal selected from the Group V, VI, and VII metals. A superior catalyst is thus obtained for use, for example, in the isomerization of paraffins and naphtha upgrading of hydrocarbon feeds. These catalysts have extremely long life, particularly in comparison to prior art catalysts. The support plus metal(s) can be calcined a single time prior to introduction of said first metal. Alternatively, the support can be calcined after the incorporation of each of said second and said third metals. Each of such calcination steps is performed under the conditions for the first calcination.

The catalysts of the present invention are prepared by the process of the present invention whereby the sulfated Group III or IV oxide or hydroxide, with or without the addition of said second and/or third metals, is calcined prior to the incorporation of said platinum, palladium, nickel, platinum/rhenium or platinum/tin. After incorporation of said first metal, the mixture is subjected to a second calcination. While it is contemplated that under some circumstances said second metal and said first metal may comprise the same element, they are distinct components of the catalyst by virtue of their incorporation either before or after the first calcination.

An essential element of the present invention is that the catalysts according to the invention are calcined at least twice. The first calcination is performed on the sulfated Group III or IV support with or without the addition of said second and third metals. That first calcination is carried out at a temperature in the range from 550-750°C for a period of 1 to 30 hours, preferably around 725°C for a period of time in the range from 1 to 2 hours. After the incorporation of said first metal, the second calcination is carried out at a temperature in the range of 450-550°C for a period of 1 to 30 hours, preferably for a period of 10 hours. The second calcination is carried out at a lower temperature than the first calcination. Combinations of temperature and time can be chosen in order to provide a desired degree of catalytic activity. For example, the catalyst prepared with a first calcination at 725°C for 1 hour provides about the same initial conversion of n-butane to isobutane as one with a first calcination at 600°C for 24 hours.

An advantage of the preparation process of the present invention is that it has been found to produce a more stable, long-lived catalyst. Catalyst life is particularly enhanced when the first calcination step is carried out at a higher temperature and for a shorter period of time than the second calcination step. Conducting the second calcination at temperatures above those specified above is believed to effect the stability of the catalyst by decreasing dispersion of said first metal on the support. Catalysts prepared according to the process of the present invention have been found to maintain activity for over 3000 hours. The process of the present invention is believed to maximize two of the functions of the catalyst; acidity and hydrogenation capacity.

The weight ratio of first metal to second metal is in the range 0.001:1 to 0.1:1, preferably 0.005:1 to 0.05:1. The weight ratio of third metal to second metal is in the range 0.1:1 to 2.0:1, preferably 0.2:1 to 1.0:1. The catalyst preferably contains a major amount of oxide or hydroxide of Group III or IV metal and a minor amount, preferably in the range of 0.02 to 15 weight percent, more preferably 1 to 8 weight percent, of total first metal, second metal and third metal.

The carrier or support for the catalyst according to the invention is an oxide or hydroxide of a Group III or IV element. Examples of suitable elements are titanium, zirconium, hafnium, aluminum, germanium, tin and lead. Preferred are zirconium, titanium, aluminum and silicon-aluminum and mixtures of two or more thereof. An essential component of the catalysts of the present invention is the first metal. Metals which can be used as said first metal according to the invention comprise platinum, palladium, and nickel and platinum/rhenium and platinum/tin mixtures and combinations thereof. A preferred embodiment of the catalyst comprises platinum.

The catalysts of the present invention are bifunctional catalysts; that is, they comprise metallic and acid sites which are believed to participate together in the mechanism pathways of the reforming reaction. The platinum, or other functionally equivalent metal, is believed mainly to serve as the catalytic site for hydrogenation and dehydrogenation reactions. The sulfated support is believed to provide the acid site for isomerization. Both sites are believed to participate in the hydrocracking and cyclization reactions.

One embodiment of the present invention comprises said second metal from Group VIII. Metals suitable as said second metal of the catalyst of the invention include iron, cobalt, nickel, ruthenium, rhodium, palladium, osmium, iridium and platinum and mixtures of two or more thereof. Of these, the most preferred is iron.

A further embodiment of the compositions of the present invention comprises addition of said third metal selected from Group V, Group VI and Group VII metals. Metals from Groups V, VI and VII which can be used as said third metal according to the invention comprise arsenic, antimony, bismuth, vanadium, niobium, tantalum, selenium, tellurium, chromium, molybdenum, tungsten, manganese and rhenium and mixtures of two or more thereof. Preferred among these is manganese.

The catalysts according to the invention may be prepared, for example, by sulfating a support of a Group III or IV metal oxide or hydroxide, calcining the mixture, impregnating said calcined mixture with an aqueous solution containing compounds of said first metal, and then subjecting said mixture to a second calcination. Embodiments of the catalyst of the present invention comprising additional classes of metals may be prepared by impregnating a sulfated support of a Group III or IV metal oxide or hydroxide with an aqueous solution containing compounds of said second metal, said third metal, or both said second and third metals, before the first calcination.

Alternatively, the support can be impregnated separately with solutions of the respective metal compounds. In this situation, the support plus metals can be calcined once or in separate calcination steps after the addition of each of said second metals and said third metals. In the latter process, the separate calcinations are performed under the conditions described for the first calcination step.

The catalysts according to the invention may also be prepared by co-precipitation of solid hydroxide of Group III or IV metals and the first metal and the respective second and/or third metals to be present in the catalyst, from aqueous solutions containing compounds of such metals. Again, the second and third metals present must be added before the first calcination step. The amount of the second and third metal hydroxide is typically in the range from 0.01 to 10.0 percent by weight of the total precipitated hydroxide. Mixtures of two or more Group V, Group VI and Group VII oxides or hydroxides may be employed.

The first metal is added thereafter and the mixture is then calcined again. In such method, the amount of the first metal is typically in the range from 0.01 to 50 percent by weight of the total precipitated hydroxide and varies for each metal. For platinum as first metal, the preferred range is 0.2 to 10 weight percent; for palladium, less than 1 weight percent; and for nickel, in the range of 1 to 10 weight percent.

Solutions of metal compounds which can be used in the preparation of catalysts according to the invention, by impregnation or co-precipitation, are known in the art. For example for the second and third metals, nitrates of iron and of manganese can be used, for example, to incorporate those metals in the catalyst. Solutions of zirconium oxychloride or of zirconyl nitrate can be used, for example, to prepare a zirconium support for the catalyst according to the invention. Various other solutions can be employed as needed.

Solution of said first metals which can be used in the preparation of catalysts of the present invention are also known in the art. For example, chloroplatinic acid, tetra-amine-platinum complex, platinum chlorides and platinum acetylacetonate can be used to incorporate platinum in the catalyst. Nickel nitrate, nickel acetate, nickel acetylacetonate and nickel chlorides can be used to incorporate nickel in the catalyst. Palladium acetate, palladium acetylacetonate and palladium chlorides can be used to incorporate palladium in the catalyst. Rhenium nitrate, rhenium oxychloride and rhenium chlorides can be used to incorporate rhenium in the catalyst. Various other solution of platinum or the other first metals can used as needed. This impregnation can be conducted in either aqueous or organic phase.

Sulfate ion may be supplied to the catalyst according to the invention by treatment of the solid catalyst with sulfuric acid, for example, 0.01-10N sulfuric acid, preferably 0.1-5N sulfuric acid. Other compounds, such as ammonium sulfate, capable of providing sulfate ion can be employed. Compounds such as hydrogen sulfide or sulfur dioxide or mercaptans, capable of forming sulfate ions upon calcining, can also be used. Preferred catalysts for use according to the invention are those which have been sulfated with ammonium sulfate.

The catalysts according to the invention contain substantial amounts of sulfate ion, preferably amounts in the range of 0.5 to 20 weight percent based on total catalyst, preferably 2 to 8 weight percent.

Preferred catalysts according to the present invention include the following compositions: platinum/iron/SO₄⁼/ZrO₂; platinum/rhenium/iron/SO₄⁼/ZrO₂; platinum/rheniun/iron/manganese/SO₄⁼/ZrO₂; platinum/rhenium/SO₄⁼/ZrO₂; nickel/iron/SO₄⁼/ZrO₂; nickel/iron/manganese/SO₄⁼/ZrO₂; nickel/manganese/SO₄⁼/ZrO₂; platinum/tin/iron/SO₄⁼/ZrO₂; platinum/tin/iron/manganese/SO₄⁼/ZrO₂.

The catalysts according to the invention may be used in a variety of hydrocarbon conversion processes, including isomerization of normal alkanes and the naphtha upgrading and hydrocracking of hydrocarbon feeds. In these processes, feed is contacted with catalyst in the presence of hydrogen. The catalysts of the present invention have been found to have an extremely long catalyst life, maintaining activity over a period of more than 3000 hours.

In one embodiment of the invention, the catalysts are used to isomerize alkanes having four to twenty, and preferably four to ten, carbon atoms, namely, butane, pentane, hexane, heptane, octane, nonane and decane, to convert the straight chain hydrocarbons into branched chain hydrocarbons having higher octane number for use as motor fuel or, as in the case of butane, having enhanced value as an intermediate for such products as tertiary butyl alcohol and high octane alkylates. In another application, the catalysts are used in the isomerization of C₂₀ to C₄₀ waxy compounds to produce lubricating oil compounds.

We have found that adding of platinum, palladium, nickel, platinum/rhenium or platinum/tin to the compositions disclosed in Hollstein et al., U.S. Patent No. 4,918,041, and Baba et al., U.S. Patent No. 5,036,035, and subjecting the mixture to a second calcination step produces a surprisingly superior catalyst for the isomerization of alkanes. These catalysts have an unexpectedly longer catalyst life than those of the prior art.

These solid superacid catalysts containing platinum, palladium, nickel, platinum/ rhenium or platinum/tin can selectively isomerize C₄ to C₁₀ alkanes to yield highly branched alkanes without producing much C₁ to C₃ light ends. The prior art gives no indication of the superior results which may be obtained by a separate calcination step after the addition of these metals to the solid superacid catalysts comprising Group VIII metal or Group VIII metal plus Group V, VI or VII metal on a sulfated Group III or IV element support. Advantages of the catalysts according to the present invention include that they have longer life, cause less corrosion to the reaction system, produce less environmental problems than prior art catalysts and are regenerable.

The isomerization is carried out by contacting the hydrocarbon feed with the solid catalyst at temperatures in the range of 0 to 400°C, preferably in the range of 20 to 250°C, and at a pressure in the range of 103 to 7584 kPa (15 to 1100 psig), preferably in the range of 2758 to 5516 kPa (400 to 800 psig). The isomerization is conducted in the presence of hydrogen. The mole ratio of hydrogen to hydrocarbon is preferably in the range of 0.1:1 to 10:1. Inert gas, such as nitrogen, helium or argon may be employed together with H₂. Generally, a temperature is used which is sufficiently high to obtain a desired rate of reaction, but not so high as to result in undesired cracking of the feed.

A preferred isomerization process comprises a pre-reduction phase and a start-up phase. The pre-reduction phase involves subjecting dry catalyst loaded into the reactor vessel to heat for a certain period of time. According to one embodiment of the process of the invention, the catalyst is dried overnight in air at a temperature in the range from 350°C to 500°C. Subsequently, the temperature is adjusted to the pre-reduction temperature and the air is replaced with nitrogen. The pre-reduction phase is carried out in a hydrogen atmosphere. This phase is preferably conducted at pressures between atmospheric pressure and the ultimate reaction pressure.

For platinum-containing embodiments of the catalyst, the pre-reduction phase involves heating the catalyst under hydrogen to a temperature in the range from 50° to 300°C, preferably 100° to 200°C, more preferably 125° to 175°C. For nickel-containing catalysts, the pre-reduction temperature may be as high as 400 to 500°C. The duration of the pre-reduction phase is dependent on the H₂ flow and the amount of platinum or other first metal to be reduced. This, in turn, is a function of the size of the reactor. For example, at a flow rate of 100 cc H₂ per minute for a 5 cc sample of catalyst comprising 0.34% platinum, 20 minutes would be a suitable duration for the pre-reduction phase.

According to one embodiment of the process of the invention, following the pre-reduction treatment, the following reactor start-up phase conditions should be employed. The temperature of the reactor vessel is reduced to a range between room temperature and the pre-reduction temperature, the pressure is increased and the hydrocarbon feed is introduced at LHSV of 1 to 5 hr⁻¹. The temperature is then gradually increased at a rate of approximately 1 to 3°C per minute until the desired isomerization reaction temperature is reached.

The catalysts according to the invention are, in another embodiment of the invention, used in naphtha upgrading of a hydrocarbon feed to produce more highly branched hydrocarbons with higher octane number. Hydrocarbon feed suitable for naphtha upgrading in the process of the present invention include whole reforming feed and fractions thereof. A preferred naphtha upgrading process comprises a pre-reduction phase and a start-up phase. The pre-reduction and start-up procedures are as described above in connection with the isomerization process.

The naphtha upgrading process is carried out by contacting the hydrocarbon feed with the solid catalyst at temperatures in the range of 0 to 400°C, preferably in the range of 20 to 250°C, and at a pressure in the range of 103 to 7584 kPa (15 to 1100 psig), preferably in the range of 2758 to 5516 kPa (400 to 800 psig). The process of the invention is conducted in the presence of hydrogen. The mole ratio of hydrogen to hydrocarbon is preferably in the range of 0.1:1 to 10:1. Inert gas, such as nitrogen, helium or argon may be employed together with H₂.

The catalysts according to the invention are, in another embodiment, used in hydrocracking of a hydrocarbon feed to produce lighter, branched hydrocarbons with higher octane number than the components of the feedstock. Hydrocarbon feed suitable for hydrocracking in the process of the present invention include any conventional hydrocracking feed, including naphtha feed. A preferred hydrocracking process comprises a pre-reduction phase and a start-up phase. The pre-reduction and start-up procedures are as described above in connection with the isomerization process.

The hydrocracking process is carried out by contacting the hydrocarbon feed with the solid catalyst at temperatures in the range of 0 to 400°C, preferably in the range of 20 to 250°C, and at a pressure in the range of 103 to 7584 kPa (15 to 1100 psig), preferably in the range of 2758 to 5516 kPa (400 to 800 psig). The process of the invention is conducted in the presence of hydrogen. The mole ratio of hydrogen to hydrocarbon is preferably in the range of 0.1:1 to 10:1. Inert gas, such as nitrogen, helium or argon may be employed together with H₂.

### Example 1

A sulfated zirconia based catalyst containing iron (Group VIII) and manganese (Group VII) was prepared by co-precipitation according to Hollstein et al., U.S. Patent No. 4,918,041, which is incorporated herein by reference.

Zirconyl nitrate (462.46 g), ferric nitrate (26.74 g) and manganese nitrate (5.62 g) were dissolved in de-ionized water to make 1 liter of Solution A. 260 g of concentrated ammonium hydroxide were diluted with sufficient de-ionized water to make 1 liter of Solution B. 500 ml of de-ionized water were added to a 5 liter Morton flask. Solution A and Solution B were added concurrently through two addition funnels to the Morton flask slowly with rapid stirring. The temperature for the precipitation reaction was maintained at approximately 65°C. The pH of the resulting reaction mixture was maintained at approximately 7.0. The reaction slurry was filtered and the filter cake was washed with de-ionized water several times until the filtrate was nitrate free. The damp cake was applied to perforated plates, placed in a tray and dried overnight at 150°C.

The dried pellets were added slowly to a beaker containing 1.0 N sulfuric acid solution at room temperature. The amount of sulfuric acid was determined by the following ratio of 15 ml of 1.0 N sulfuric acid per gram of pellet. The sulfuric acid solution was decanted after the pellets had been soaked for 2 hours. The pellets were then calcined at 725°C for 1 hour. The iron and manganese concentration in the final catalyst were 1.5% and 0.5%, respectively (Preparation I).

The pellets from Preparation I (20-40 mesh) were subsequently impregnated with an aqueous solution (incipient wetness) of chloroplatinic acid. The preparation was dried overnight at 120°C and then calcined at 450°C for 16 hours. The final catalyst had 0.5 weight percent platinum.

### Example 2

Sulfated zirconia based catalyst containing iron and manganese was prepared by the co-precipitation method similar to that of Example 1, except that ammonium sulfate, rather than sulfuric acid, was used to sulfate the catalyst. The sulfation was carried out prior to calcining of the catalyst. The dried pellets from the overnight drying step were treated with ammonium sulfate to incorporate 4-8% of sulfate ion in the catalyst, using incipient wetness technique, and then calcined at 725°C for 1 hour (Preparation II).

25 g of pellets from Preparation II (20-40 mesh) were impregnated with a water solution containing nickel nitrate. This preparation was dried overnight and calcined for 16 hours between 450-550°C. The amount of nickel in the final catalyst was 5%.

### Example 3

25 g of pellets from Preparation II (20-40 mesh) were impregnated with a water solution containing palladium chloride. This preparation was dried overnight and calcined between 450-550°C for 16 hours. The amount of palladium in the final catalyst was 0.5%.

### Example 4

A Pt/Fe/Mn/SO₄⁼/ZrO₂ catalyst containing 0.25 wt% platinum was prepared according to the procedure of Example 1 above for use in the isomerization of a mixture of n-hexane (87%) and n-pentane (13%). Before starting the reaction, the catalyst was dried overnight at 450°C in flowing air. Subsequently, the reactor was cooled to 150°C and nitrogen was passed over the catalyst. This was followed by 2 hours of hydrogen flow over the catalyst and reduction of the temperature to room temperature. The reaction conditions and product distribution are presented in Table I.

### Example 5

A Pt/Fe/Mn/SO₄⁼/ZrO₂ catalyst containing 0.34 wt% platinum was prepared according to the procedure of Example 1 and pre-treated as described in Example 6 above for use in the hydrocracking and isomerization of cyclohexane. The reaction conditions and product distribution are presented in Table II.

**Table I**

| Isomerization of n-Hexane (87%) and n-Pentane (13%) Catalyzed by Pt/Fe/Mn/SO₄⁼/ZrO₂ with 0.25 wt% Pt | | |
|---|---|---|
| Temp C | 200 | 200 |
| Press. PSIG | 500 | 500 |
| LHSV, 1/hr | 2 | 4 |
| H2, cc/min | 100 | 100 |
| ave. of (hrs) | 50-90 | 95-111 |
| | | |
| wt % | | |
| | | |
| C1 | 0.24 | 0.08 |
| C2 | 0.68 | 0.17 |
| C3 | 2.74 | 0.84 |
| I-C4 | 5.96 | 3.19 |
| N-C4 | 1.8 | 0.59 |
| I-C5 | 3.37 | 1.89 |
| N-C5 | 1.09 | 0.54 |
| 2,2DMC4 | 21.23 | 16.29 |
| 2,3DMC4 | 7.97 | 8.44 |
| 2MC5 | 26.19 | 28.54 |
| 3MC5 | 15.99 | 17.92 |
| N-C6 | 11.54 | 13.84 |
| 2,2DMC5 | 0 | 0.03 |
| 2,4DMC5 | 0.55 | 2.38 |
| 2,2,3TMC4 | 0 | 0.01 |
| 3,3DMC5 | 0 | 0.02 |
| 2MC6 | 0.06 | 0.12 |
| 2,3DMC5 | 0 | 0.04 |
| 3MC6 | 0.05 | 0.17 |
| 2,2,4-TMC5 | 0.01 | 0.1 |
| N-C7 | 0 | 0.06 |

**Table II**

| Hydrocracking and Isomerization of Cyclohexane Catalyzed by Pt/Fe/Mn/SO₄⁼/ZrO₂ with 0.34 wt% Pt | | | |
|---|---|---|---|
| Temp. C | 181 | 200 | 220 |
| Pres. kPa PSIG | 3447 (500) | 3447 (500) | 3447 (500) |
| LHSV, (1/hr) | 2 | 2 | 2 |
| H2, cc/min | 100 | 100 | 100 |
| Ave. hr of | 75-118 | 120-157 | 185-213 |
| | | | |
| wt % | | | |
| | | | |
| Total C1-C3 | 0.24 | 0.87 | 1.77 |
| Total C4 | 5.58 | 13.87 | 20.14 |
| Total C5 | 2.22 | 7.01 | 11.6 |
| 2,2 DMC4 | 1.06 | 1.99 | 2.2 |
| 2,3DMC4 | 1.18 | 1.89 | 5 |
| 2MC5 | 4.19 | 4.33 | 7.61 |
| 3MC5 | 2.55 | 3.92 | 4.61 |
| n-C6 | 2.1 | 2.94 | 3.62 |
| MCYC5 | 47.09 | 37.92 | 26.92 |
| CYC6 | 30.86 | 19.77 | 12.05 |
| Total C6+ | 3.04 | 6.76 | 13.71 |

### Example 6

A Pt/Fe/Mn/SO₄⁼/ZrO₂ catalyst containing 0.34 wt% platinum was prepared according to the procedure of Example 1 and pre-treated as described in Example 6 above for use in the upgrading of naphtha using IBP190 feed. Table III presents the reaction conditions and product distribution.

### Example 7

A Pt/Fe/Mn/SO₄⁼/ZrO₂ catalyst containing 0.34 wt% platinum was prepared according to the procedure of Example 1 and pre-treated as described in Example 6 above for use in the hydrocracking and upgrading of naphtha using whole reforming feed. The reaction conditions and product distribution are presented in Table IVA and Table IVB.

### Example 8

A Ni/Fe/Mn/SO₄⁼/ZrO₂ catalyst containing 7.5 wt% nickel was prepared according to the procedure of Example 2 and pre-treated as described in Example 6 above for use in the upgrading of naphtha using IBP190 feed in the presence of hydrogen. The reaction conditions and product distribution are presented in Table V.

**Table III**

| Naphtha Upgrading of IBP190 Feed Catalyzed by Pt/Fe/Mn/SO₄⁼/ZrO₂ with 0.34 wt% Pt | | | |
|---|---|---|---|
| Temp, C | | 207 | 220 |
| Pres. kPa (PSIG) | | 3447 (500) | 3447 (500) |
| LHSV, (1/hr) | | 2 | 2 |
| H2, ml/min | | 100 | 100 |
| Ave. of (hr) | | 100-300 | 1800-2000 |
| | IBP 190 | | |
| wt % | | | |
| | | | |
| Total C1-C3 | 0 | 5.46 | 3.9 |
| i-C4 | 0 | 11.2 | 9.7 |
| Total C4 | 0 | 12.1 | 10.3 |
| i-C5 | 0.3 | 4.91 | 3.9 |
| Total C5 | 1.9 | 6.7 | 5.4 |
| 2,2 DMC4 | 0.66 | 10.4 | 7.8 |
| 2,3 DMC4 | 1.94 | 7.5 | 7.8 |
| 2 MC5 | 15.5 | 21 | 21.9 |
| 3 MC5 | 9.6 | 13.1 | 13.2 |
| n-C6 | 27.4 | 10.3 | 10.2 |
| MCYC5 | 14.34 | 5.8 | 8.8 |
| Bezene | 2.5 | 0 | 0 |
| CYC6 | 8.93 | 3.10 | 4.8 |
| Total C6+ | 14.37 | 4.62 | 5.9 |

**Table IVA**

| Hydrocracking and Naphtha Upgrading of Whole Reforming Feed Catalyzed by Pt/Fe/Mn/SO₄⁼/ZrO₂ with 0.34 wt% Pt | | |
|---|---|---|
| Temp. C | | 200 |
| Pres. kPa (PSIG) | | 3447 (500) |
| LHSV, (1/hr) | | 2 |
| H2, (cc/min) | | 100 |
| | Whole Feed | Product (200 hr) |
| wt % | | |
| | | |
| Paraffins | 25 | 11 |
| i-Paraffins | 28 | 53 |
| Aromatics | 12 | 0 |
| Naphthenes | 31 | 36 |
| Olefins | 1 | 0 |
| Benzene | 0.5 | 0 |
| T90 (F) | 345 | 254 |

**Table IVB**

| Hydrocracking and Naphtha Upgrading of Whole Reforming Feed Catalyzed by Pt/Fe/Mn/SO₄⁼/ZrO₂with 0.34 wt% Pt | | |
|---|---|---|
| Number of carbon | Whole feed | Product |
| C3 | 0 | 2.46 |
| C4 | 0 | 21.27 |
| C5 | 0.81 | 12.03 |
| C6 | 18.47 | 25.3 |
| C7 | 22.33 | 20.59 |
| C8 | 19.95 | 11.52 |
| C9 | 17.35 | 6.61 |
| C10 | 14.1 | 0.1 |
| C11 | 3.3 | 0 |

**Table V**

| Naphtha Upgrading of IBP190 Feed Catalyzed by Ni/Fe/Mn/SO₄⁼/ZrO₂ with 7.5 wt% Ni | | |
|---|---|---|
| Temp, C | | 215 |
| Pres. kPa (PSIG) | | 3447 (500) |
| LHSV, (1/hr) | | 2 |
| H2, ml/min | | 100 |
| Aver. of (hr) | | 75-90 |
| | IBP 190 | |
| wt % | | |
| | | |
| Total C1-C3 | 0 | 3.9 |
| i-C4 | 0 | 12.9 |
| Total C4 | 0 | 13.7 |
| i-C5 | 0.3 | 4.6 |
| Total C5 | 1.9 | 6.2 |
| 2,2DMC4 | 0.6 | 4.7 |
| 2,3DMC4 | 1.9 | 7.2 |
| 2MC5 | 15.5 | 19.1 |
| 3MC5 | 9.6 | 11.9 |
| n-C6 | 27.4 | 9.9 |
| MCYC5 | 14.3 | 9.1 |
| Benzene | 2.5 | 0 |
| CYC6 | 8.9 | 3.9 |
| Total C6+ | 14.4 | 10.6 |

### Example 9

A Pd/Fe/Mn/SO₄⁼/ZrO₂ catalyst containing 0.5 wt% palladium was prepared according to the procedure of Example 3 and pre-treated according to Example 6 for use in the upgrading of naphtha using IBP190 feed. The reaction conditions and product distribution are presented in Table VI.

**Table VI**

| Naphtha Upgrading of IBP190 Feed Catalyzed by Pd/Fe/Mn/SO₄⁼/ZrO₂ with 0.5 wt% Pd | | |
|---|---|---|
| Temp, C | | 215 |
| Pres. kPa (PSIG) | | 3447 (500) |
| LHSV, (1/hr) | | 2 |
| H2, ml/min | | 100 |
| Aver. of (hr) | | 65-90 |
| | IBP 190 | |
| wt % | | |
| | | |
| Total C1-C3 | 0 | 5.2 |
| i-C4 | 0 | 6.1 |
| Total C4 | 0 | 6.7 |
| i-C5 | 0.3 | 2.5 |
| Total C5 | 1.9 | 3.5 |
| 2,2DMC4 | 0.6 | 10.3 |
| 2,3DMC4 | 1.9 | 7.4 |
| 2MC5 | 15.5 | 24.9 |
| 3MC5 | 9.6 | 17 |
| n-C6 | 27.4 | 14.9 |
| MCYC5 | 14.3 | 4.1 |
| Benzene | 2.5 | 0 |
| CYC6 | 8.9 | 1.9 |
| Total C6+ | 14.4 | 3.9 |

## Claims

1. A catalyst composition comprising a mixture of:
(a) a sulfated support comprising oxide or hydroxide of Group III or Group IV elements; and
(b) a first metal comprising a metal or mixture of metals selected from the group consisting of platinum, palladium, nickel, platinum and rhenium, and platinum and tin and combinations thereof;
wherein said catalyst is obtainable by the steps comprising:
(1) calcining said sulfated support in a first calcination step at a temperature in the range of from 550 to 750°C;
(2) introducing said first metal into said sulfated support; and
(3) calcining said sulfated support and said first metal in a second calcination step at a temperature in the range of from 450 to 550°C,
wherein said second calcination step is carried out at a lower temperature than said first calcination step.

2. The composition of claim 1 wherein said first metal comprises platinum.

3. The composition of claim 1 or 2 further comprising at least one second metal selected from the group consisting of Group VIII elements, wherein said second metal is incorporated into said composition before said first calcination step.

4. The composition of any of claims 1 to 3 further comprising at least one third metal selected from the group consisting of Group V, Group VI and Group VII elements, wherein said third metal is incorporated into said composition before said first calcination step.

5. The catalyst composition of claim 1 further comprising at least one second metal selected from group consisting of Group VIII elements; and at least one third metal selected from the group consisting of Group V, Group VI and Group VII elements wherein the second metal and third metal are incorporated into said composition in a first calcination step.

6. The composition of claim 3 or 5 wherein said second metal comprises iron, cobalt, nickel, ruthenium, rhodium, palladium, osmium, iridium or platinum or mixtures thereof.

7. The composition of claim 6 wherein said second metal comprises iron.

8. The composition of claim 4 or 5 wherein said third metal comprises vanadium, niobium, chromium, molybdenum, tungsten, manganese, rhenium, arsenic, antimony or bismuth or mixtures thereof.

9. The composition of claim 8 wherein said third metal comprises manganese.

10. The composition of claims 3 and 4, or 5, wherein said first said metal comprises platinum and rhenium, said second metal comprises iron, and said third metal comprises manganese.

11. The composition of claims 3 and 4, or 5, except when dependent on claim 2, wherein said first metal comprises nickel, said second metal comprises iron, and said third metal comprises manganese.

12. The composition of any of claims 3 to 11 wherein said first calcination step comprises separately calcining said mixture subsequent to the introduction of each of said second metal or metals and/or subsequent to the introduction of each of said third metal or metals.

13. The composition of any of claims 1 to 12 wherein the conditions of said first calcination step comprise a duration of 1 to 30 hours.

14. The composition of claim 13 wherein said duration is in the range of 1 to 2 hours.

15. The composition of any of claims 1 to 14 wherein the conditions of said second calcination step comprise a duration of 1 to 30 hours.

16. The composition of claim 15 wherein said duration is 10 hours.

17. The composition of any of claims 1 to 16 wherein said support comprises oxide or hydroxide of zirconium, titanium, or aluminium or mixtures thereof.

18. The composition of claim 17 wherein said support comprises oxide or hydroxide of zirconium.

19. A process for preparing a catalyst which comprises:
(a) sulfating a support comprising oxide or hydroxide of Group III or Group IV elements;
(b) heating said support in a first calcination step at a temperature in the range of from 550 to 750°C;
(c) introducing a first metal on said support, said first metal comprising a metal or mixture of metals selected from the group consisting of platinum, palladium, nickel, platinum and rhenium, and platinum and tin and combinations thereof; and
(d) heating said support and said first metal in a second calcination step at a temperature in the range of from 450 to 550°C,
wherein said second calcination step is carried out at a lower temperature than said first calcination step.

20. The process of claim 19 wherein the conditions of said first calcination step comprise a duration of 1 to 30 hours.

21. The process of claim 19 or 20 wherein the conditions of said second calcination step comprise a duration of 1 to 30 hours.

22. The process of any of claims 19 to 21 wherein said process further comprises introducing on said support prior to said first calcination step at least one second metal selected from Group VIII metals and/or at least one third metal selected from the group consisting of Group V, Group VI and Group VII metals.

23. The process of claim 22 wherein said first calcination step comprises separately calcining said mixture subsequent to the introduction of each of said second metal or metals and/or each of said third metal or metals.

24. The process of any of claims 19 to 21 wherein said process further comprises introducing on said support at least one second metal selected from group consisting of Group VIII elements; and (iii) introducing on said support at least one third metal selected from the group consisting of Group V, Group VI and Group VII elements; calcining the mixture comprising said support said second metal and said third metal in said first calcination step; and calcining said mixture and said first metal in said second calcination step.

25. A process for isomerizing a feedstock comprising hydrocarbons having 4 to 40 carbon atoms per molecule, or for naphtha upgrading a reforming feedstock or fraction thereof, or for hydrocracking a hydrocracking feedstock, which process comprises contacting said feedstock in the presence of hydrogen with a catalyst composition according to any of claims 1 to 18 or a catalyst prepared by a process according to any of claims 19 to 24.

26. The process of claim 25 wherein said process is carried out with temperature in the range of 0 to 400"C and pressure in the range of 103 to 7584 kPa (15 to 1000 psig).

27. The process of claim 26 wherein said temperature is 20 to 250°C.

28. The process of claim 26 or 27 wherein said pressure is 2758 to 4136 kPa (400 to 600 psig).

29. The process of any of claims 25 to 28 wherein said catalyst is subjected to a pre-reduction process comprising:
(a) drying said catalyst in air at a temperature of 350 to 500°C;
(b) adjusting said temperature to a pre-production temperature in the range of 50 to 500°C;
(c) purging said air with N₂;
(d) replacing said N₂ with H₂; and
(e) reducing said catalyst in H₂ at said pre-reduction temperature at a pressure of 103 to 7584 kPa (15 to 1100 psig).

30. The process of any of claims 25 to 29 wherein said feedstock for isomerization comprises hydrocarbons having 4 to 10 carbon atoms per molecule or hydrocarbons having 20 to 40 carbon atoms per molecule.

## Patentansprüche

1. Katalysatorzusammensetzung, die ein Gemisch aus
(a) einem sulfatierten Träger, der Oxide oder Hydroxide von Elementen der Gruppe III oder IV enthält, und
(b) einem ersten Metall enthält, das ein Metall oder ein Gemisch von Metallen, das/die aus der aus Platin, Palladium, Nickel, Platin und Rhenium und Platin und Zinn bestehenden Gruppe ausgewählt ist/sind, und Kombinationen davon umfaßt,
wobei der Katalysator durch die Stufen erhältlich ist, welche umfassen:
(1) Kalzinieren des sulfatierten Trägers in einer ersten Kalzinierungsstufe bei einer Temperatur im Bereich von 550 bis 750°C;
(2) Einführen des ersten Metalls in den sulfatierten Träger; und
(3) Kalzinieren des sulfatierten Trägers und des ersten Metalls in einer zweiten Kalzinierungsstufe bei einer Temperatur im Bereich von 450 bis 550°C, wobei die zweite Kalzinierungsstufe bei einer Temperatur durchgeführt wird, die niedriger ist als die der ersten Kalzinierungsstufe.

2. Zusammensetzung nach Anspruch 1, worin das erste Metall Platin umfaßt.

3. Zusammensetzung nach Anspruch 1 oder 2, die zusätzlich mindestens ein zweites Metall enthält, das aus der aus Elementen der Gruppe VIII bestehenden Gruppe ausgewählt ist, wobei das zweite Metall vor der ersten Kalzinierungsstufe in die Zusammensetzung einverleibt wird.

4. Zusammensetzung nach einem der Ansprüche 1 bis 3, die zusätzlich mindestens ein drittes Metall enthält, das aus der aus Elementen der Gruppe V, Gruppe VI und Gruppe VII bestehenden Gruppe ausgewählt ist, wobei das dritte Metall vor der ersten Kalzinierungsstufe in die Zusammensetzung einverleibt wird.

5. Katalysatorzusammensetzung nach Anspruch 1, die zusätzlich mindestens ein zweites Metall, das aus der aus Elementen der Gruppe VIII bestehenden Gruppe ausgewählt ist, und mindestens ein drittes Metall enthält, das aus der aus Elementen der Gruppe V, Gruppe VI und Gruppe VII bestehenden Gruppe ausgewählt ist, wobei das zweite Metall und das dritte Metall in der ersten Kalzinierungsstufe in die Zusammensetzung einverleibt werden.

6. Zusammensetzung nach Anspruch 3 oder 5, worin das zweite Metall Eisen, Kobalt, Nickel, Ruthenium, Rhodium, Palladium, Osmium, Iridium oder Platin oder Gemische davon umfaßt.

7. Zusammensetzung nach Anspruch 6, worin das zweite Metall Eisen umfaßt.

8. Zusammensetzung nach Anspruch 4 oder 5, worin das dritte Metall Vanadium, Niob, Chrom, Molybdän, Wolfram, Mangan, Rhenium, Arsen, Antimon oder Bismut oder Gemische davon umfaßt.

9. Zusammensetzung nach Anspruch 8, worin das dritte Metall Mangan umfaßt.

10. Zusammensetzung nach den Ansprüchen 3 und 4 oder 5, worin das erste Metall Platin und Rhenium, das zweite Metall Eisen und das dritte Metall Mangan umfaßt.

11. Zusammensetzung nach den Ansprüchen 3 und 4 oder 5, außer, wenn diese von Anspruch 2 abhängen, worin das erste Metall Nickel, das zweite Metall Eisen und das dritte Metall Mangan umfaßt.

12. Zusammensetzung nach einem der Ansprüche 3 bis 11, wobei die erste Kalzinierungsstufe das getrennte Kalzinieren des Gemisches nach der Einführung des jeweiligen zweiten Metalls oder der jeweiligen zweiten Metalle und/oder nach der Einführung des jeweiligen dritten Metalls oder der jeweiligen dritten Metalle umfaßt.

13. Zusammensetzung nach einem der Ansprüche 1 bis 12, wobei die Bedingungen der ersten Kalzinierungsstufe eine Dauer von 1 bis 30 Stunden umfassen.

14. Zusammensetzung nach Anspruch 13, wobei die Dauer im Bereich von 1 bis 2 Stunden ist.

15. Zusammensetzung nach einem der Ansprüche 1 bis 14, wobei die Bedingungen der zweiten Kalzinierungsstufe eine Dauer von 1 bis 30 Stunden umfassen.

16. Zusammensetzung nach Anspruch 15, wobei die Dauer 10 Stunden ist.

17. Zusammensetzung nach einem der Ansprüche 1 bis 16, worin der Träger ein Oxid oder Hydroxid von Zirconium, Titan oder Aluminium oder Gemische davon enthält.

18. Zusammensetzung nach Anspruch 17, worin der Träger ein Oxid oder Hydroxid von Zirconium enthält.

19. Verfahren zur Herstellung eines Katalysators, welches umfaßt:
(a) Sulfatieren eines Trägers, der Oxide oder Hydroxide von Elementen der Gruppe III oder Gruppe IV enthält;
(b) Erhitzen des Trägers in einer ersten Kalzinierungsstufe bei einer Temperatur im Bereich von 550 bis 750°C;
(c) Einbringen eines ersten Metalls in den Träger, wobei das erste Metall ein Metall oder ein Gemisch von Metallen, das/die aus der aus Platin, Palladium, Nickel, Platin und Rhenium und Platin und Zinn bestehenden Gruppe ausgewählt ist/sind, und Kombinationen davon umfaßt; und
(d) Erhitzen des Trägers und des ersten Metalls in einer zweiten Kalzinierungsstufe bei einer Temperatur im Bereich von 450 bis 550°C, wobei die zweite Kalzinierungsstufe bei einer Temperatur durchgeführt wird, die niedriger ist als die der zweiten Kalzinierungsstufe.

20. Verfahren nach Anspruch 19, wobei die Bedingungen der ersten Kalzinierungsstufe eine Dauer von 1 bis 30 Stunden umfassen.

21. Verfahren nach Anspruch 19 oder 20, wobei die Bedingungen der zweiten Kalzinierungsstufe eine Dauer von 1 bis 30 Stunden umfassen.

22. Verfahren nach einem der Ansprüche 19 bis 21, wobei das Verfahren vor der ersten Kalzinierungsstufe zusätzlich das Einbringen mindestens eines zweiten Metalls, das aus Metallen der Gruppe VIII ausgewählt ist, und/oder mindestens eines dritten Metalls in den Träger umfaßt, das aus der Gruppe ausgewählt ist, die aus Metallen der Gruppe V, Gruppe VI und Gruppe VII besteht.

23. Verfahren nach Anspruch 22, wobei die erste Kalzinierungsstufe das getrennte Kalzinieren des Gemisches nach dem Einbringen des jeweiligen zweiten Metalls bzw. der jeweiligen zweiten Metalle und/oder des jeweiligen dritten Metalls bzw. der jeweiligen dritten Metalle umfaßt.

24. Verfahren nach einem der Ansprüche 19 bis 21, wobei das Verfahren zusätzlich das Einbringen mindestens eines zweiten Metalls, das aus der aus Elementen der Gruppe VIII bestehenden Gruppe ausgewählt ist, in den Träger und (iii) das Einbringen mindestens eines dritten Metalls, das aus der aus Elementen der Gruppe V, Gruppe VI und VII bestehenden Gruppe ausgewählt ist, in den Träger, das Kalzinieren des Gemisches, das den Träger, das zweite Metall und das dritte Metall enthält, in der ersten Kalzinierungsstufe und das Kalzinieren des Gemisches und des ersten Metalls in der zweiten Kalzinierungsstufe umfaßt.

25. Verfahren zur Isomerisierung eines Ausgangsmaterials, das Kohlenwasserstoffe mit 4 bis 40 Kohlenstoffatomen pro Molekül enthält, oder zur Aufkonzentration von Benzin in einem Reformierungsausgangsmaterial oder einer Fraktion davon, oder zum Hydrocracken eines Hydrocracking-Ausgangsmaterials, welches das Kontaktieren des Ausgangsmaterials mit einer Katalysatorzusammensetzung nach einem der Ansprüche 1 bis 18 oder einem Katalysator, der durch ein Verfahren nach einem der Ansprüche 19 bis 24 hergestellt wird, in Anwesenheit von Wasserstoff umfaßt.

26. Verfahren nach Anspruch 25, wobei das Verfahren bei einer Temperatur im Bereich von 0 bis 400°C und einem Druck im Bereich von 103 bis 7584 kPa (15 bis 1000 psig) durchgeführt wird.

27. Verfahren nach Anspruch 26, wobei die Temperatur 20 bis 250°C ist.

28. Verfahren nach Anspruch 26 oder 27, wobei der Druck 2758 bis 4136 kPa (400 bis 600 psig) ist.

29. Verfahren nach einem der Ansprüche 25 bis 28, wobei der Katalysator einem Vorreduktionsverfahren unterworfen wird, welches umfaßt:
(a) Trocknen des Katalysators in Luft bei einer Temperatur von 350 bis 500°C;
(b) Einstellen der Temperatur auf eine Vorreduktionstemperatur im Bereich von 50 bis 500°C;
(c) Ausspülen der Luft mit N₂;
(d) Ersetzen von N₂ durch H₂; und
(e) Reduzieren des Katalysators in H₂ bei der Vorreduktionstemperatur bei einem Druck von 103 bis 7584 kPa (15 bis 1100 psig).

30. Verfahren nach einem der Ansprüche 25 bis 29, wobei das Ausgangsmaterial für die Isomerisierung Kohlenwasserstoffe mit 4 bis 10 Kohlenstoffatomen pro Molekül oder Kohlenwasserstoffe mit 20 bis 40 Kohlenstoffatomen pro Molekül enthält.

## Revendications

1. Composition de catalyseur comprenant un mélange :
(a) d'un support sulfaté comprenant un oxyde ou hydroxyde d'éléments du Groupe III ou du Groupe IV; et
(b) d'un premier métal comprenant un métal ou mélange de métaux choisis dans le groupe comprenant le platine, le palladium, le nickel, le platine et le rhénium ainsi que le platine et l'étain et leurs combinaisons;
dans laquelle ledit catalyseur est obtenable par les étapes comprenant :
(1) la calcination dudit support sulfaté dans une première étape de calcination à une température allant de 550 à 750°C;
(2) l'introduction du premier métal dans le support sulfaté; et
(3) la calcination des support sulfaté et premier métal susdits dans une seconde étape de calcination à une température allant de 450 à 550°C,
dans laquelle la seconde étape de calcination est réalisée à une température inférieure à celle de la première étape de calcination.

2. Composition suivant la revendication 1, dans laquelle le premier métal comprend du platine.

3. Composition suivant l'une ou l'autre des revendications 1 et 2, comprenant de plus au moins un second métal choisi dans le groupe comprenant les éléments du Groupe VIII, dans laquelle le second métal est incorporé dans ladite composition avant la première étape de calcination précitée.

4. Composition suivant l'une quelconque des revendications 1 à 3, comprenant de plus au moins un troisième métal choisi dans le groupe comprenant les éléments du Groupe V, du Groupe VI et du Groupe VII, dans laquelle le troisième métal est incorporé dans ladite composition avant la première étape de calcination précitée.

5. Composition de catalyseur suivant la revendication 1, comprenant de plus au moins un second métal choisi dans le groupe comprenant les éléments du Groupe VIII, et au moins un troisième métal choisi dans le groupe comprenant les éléments du Groupe V, du Groupe VI et du Groupe VII, dans laquelle le second métal et le troisième métal sont incorporés dans ladite composition dans une première étape de calcination.

6. Composition suivant l'une ou l'autre des revendications 3 et 5, dans laquelle le second métal comprend du fer, du cobalt, du nickel, du ruthénium, du rhodium, du palladium, de l'osmium, de l'iridium ou du platine ou leurs mélanges.

7. Composition suivant la revendication 6, dans laquelle le second métal comprend du fer.

8. Composition suivant l'une ou l'autre des revendications 4 et 5, dans laquelle le troisième métal comprend du vanadium, du niobium, du chrome, du molybdène, du tungstène, du manganèse, du rhénium, de l'arsenic, de l'antimoine ou du bismuth ou leurs mélanges.

9. Composition suivant la revendication 8, dans laquelle le troisième métal comprend du manganèse.

10. Composition suivant l'une quelconque des revendications 3, 4 et 5, dans laquelle le premier métal comprend du platine et du rhénium, le second métal comprend du fer et le troisième métal comprend du manganèse.

11. Composition suivant l'une quelconque des revendications 3, 4 et 5, à l'exception lorsque dépendantes de la revendication 2, dans laquelle le premier métal comprend du nickel, le second métal comprend du fer et le troisième métal comprend du manganèse.

12. Composition suivant l'une quelconque des revendications 3 à 11, dans laquelle la première étape de calcination consiste à calciner séparément ledit mélange après l'introduction de chacun des seconds métal ou métaux et/ou après l'introduction de chacun des troisièmes métal ou métaux.

13. Composition suivant l'une quelconque des revendications 1 à 12, dans laquelle les conditions de la première étape de calcination comprennent une durée de 1 à 30 heures.

14. Composition suivant la revendication 13, dans laquelle la durée est de 1 à 2 heures.

15. Composition suivant l'une quelconque des revendications 1 à 14, dans laquelle les conditions de la second étape de calcination comprennent une durée de 1 à 30 heures.

16. Composition suivant la revendication 15, dans laquelle la durée est de 10 heures.

17. Composition suivant l'une quelconque des revendications 1 à 16, dans laquelle le support précité comprend un oxyde ou hydroxyde de zirconium, de titane ou d'aluminium ou leurs mélanges.

18. Composition suivant la revendication 17, dans laquelle ledit support comprend un oxyde ou hydroxyde de zirconium.

19. Procédé de préparation d'un catalyseur, qui comprend :
(a) la sulfatation d'un support comprenant un oxyde ou hydroxyde d'éléments du Groupe III ou du Groupe IV;
(b) le chauffage dudit support dans une première étape de calcination à une température allant de 550 à 750°C:
(c) l'introduction d'un premier métal sur le support susdit, ledit premier métal comprenant un métal ou mélange de métaux choisis dans le groupe comprenant le platine, le palladium, le nickel, le platine et le rhénium et le platine et l'étain et leurs combinaisons; et
(d) le chauffage du support et du premier métal dans une seconde étape de calcination à une température allant de 450 à 550°C,
dans lequel la seconde étape de calcination précitée est réalisée à une température inférieure à celle de la première étape de calcination.

20. Procédé suivant la revendication 19, dans lequel les conditions de la première étape de calcination comprennent une durée de 1 à 30 heures.

21. Procédé suivant l'une ou l'autre des revendications 19 et 20, dans lequel les conditions de la seconde étape de calcination comprennent une durée de 1 à 30 heures.

22. Procédé suivant l'une quelconque des revendications 19 à 21, dans lequel le procédé comprend de plus l'introduction sur le support précité avant la première étape de calcination d'au moins un second métal choisi parmi les métaux du Groupe VIII et/ou d'au moins un troisième métal choisi dans le groupe comprenant les métaux du Groupe V, du Groupe VI et du Groupe VII.

23. Procédé suivant la revendication 22, dans lequel la première étape de calcination consiste à calciner séparément ledit mélange après l'introduction de chacun des seconds métal ou métaux et/ou de chacun des troisièmes métal ou métaux.

24. Procédé suivant l'une quelconque des revendications 19 à 21, dans lequel ledit procédé comprend de plus l'introduction sur le support susdit d'au moins un second métal choisi dans le groupe comprenant les éléments du Groupe VIII et (iii) l'introduction sur ledit support d'au moins un troisième métal choisi dans le groupe comprenant les éléments du Groupe V, du Groupe VI et du Groupe VII, la calcination du mélange comprenant le support, le second métal et le troisième métal dans la première étape de calcination, et la calcination du mélange et du premier métal susdits dans la seconde étape de calcination.

25. Procédé d'isomérisation d'une charge d'alimentation comprenant des hydrocarbures comportant 4 à 40 atomes de carbone par molécule, ou de valorisation de naphta d'une charge d'alimentation de reformage ou d'une fraction de celle-ci, ou d'hydrocraquage d'une charge d'alimentation d'hydrocraquage, lequel procédé comprend la mise en contact de ladite charge d'alimentation en présence d'hydrogène avec une composition de catalyseur suivant l'une quelconque des revendications 1 à 18 ou un catalyseur préparé par un procédé suivant l'une quelconque des revendications 19 à 24.

26. Procédé suivant la revendication 25, dans lequel ledit procédé est réalisé à une température allant de 0 à 400°C et à une pression allant de 103 à 7584 kPa (15 à 1000 livres par pouce carré jaugées).

27. Procédé suivant la revendication 26, dans lequel la température est de 20 à 250°C.

28. Procédé suivant l'une ou l'autre des revendications 26 et 27, dans lequel la pression est de 2758 à 4136 kPa (400 à 600 livres par pouce carré jaugées).

29. Procédé suivant l'une quelconque des revendications 25 à 28, dans lequel ledit catalyseur est soumis à un procédé de préréduction comprenant :
(a) le séchage dudit catalyseur à l'air à une température de 350 à 500°C;
(b) l'ajustement de ladite température à une température de préréduction allant de 50 à 500°C;
(c) la purge de cet air avec du N₂;
(d) le remplacement du N₂ par de l'H₂; et
(e) la réduction dudit catalyseur dans de l'H₂ à la température de préréduction précitée à une pression de 103 à 7584 kPa (15 à 1100 livres par pouce carré jaugées).

30. Procédé suivant l'une quelconque des revendications 25 à 29, dans lequel la charge d'alimentation précitée pour l'isomérisation comprend des hydrocarbures comportant 4 à 10 atomes de carbone par molécule ou des hydrocarbures comportant 20 à 40 atomes de carbone par molécule.
